(19) **Europäisches Patentamt / European Patent Office / Office européen des brevets**

(11) **EP 3 083 320 B1**

(12) **EUROPÄISCHE PATENTSCHRIFT**

(45) Veröffentlichungstag und Bekanntmachung des Hinweises auf die Patenterteilung:
**05.08.2020 Patentblatt 2020/32**

(21) Anmeldenummer: **14799409.9**

(22) Anmeldetag: **14.11.2014**

(51) Int Cl.:
*H02P 29/024* (2016.01)   *H02P 3/18* (2006.01)
*H02P 23/00* (2016.01)   *B60L 3/04* (2006.01)

(86) Internationale Anmeldenummer:
**PCT/EP2014/074588**

(87) Internationale Veröffentlichungsnummer:
**WO 2015/090754 (25.06.2015 Gazette 2015/25)**

(54) **VORRICHTUNG UND VERFAHREN ZUM BETREIBEN EINER ELEKTRISCHEN MASCHINE**

APPARATUS AND METHOD FOR OPERATING AN ELECTRIC MACHINE

APPAREIL ET PROCEDE POUR FAIRE FONCTIONNER UNE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2013 DE 102013226564**

(43) Veröffentlichungstag der Anmeldung:
**26.10.2016 Patentblatt 2016/43**

(73) Patentinhaber: **Robert Bosch GmbH**
**70442 Stuttgart (DE)**

(72) Erfinder:
• **MERKEL, Tino**
**71701 Schwieberdingen (DE)**
• **XIE, Lingling**
**71634 Ludwigsburg-Eglosheim (DE)**
• **KOENIG, Andreas**
**73666 Baltmannsweiler (DE)**
• **RUDOLPH, Marc**
**74391 Erligheim (DE)**
• **PLAPP, Guenther**
**70794 Filderstadt (DE)**

(56) Entgegenhaltungen:
**DE-A1-102007 020 509    DE-A1-102012 002 023**
**US-B1- 7 279 862**

EP 3 083 320 B1

**Beschreibung**

Die vorliegende Erfindung betrifft eine Vorrichtung und ein Verfahren zum Betreiben einer elektrischen Maschine. Insbesondere betrifft die vorliegende Erfindung eine Vorrichtung und ein Verfahren zum Betreiben einer elektrischen Maschine bei dem Übergang der elektrischen Maschine in einen aktiven Kurzschlussbetrieb.

Stand der Technik

Elektrische Maschinen, wie zum Beispiel permanent erregte Synchronmaschinen, werden für zahlreiche technische Anwendungen eingesetzt. Beispielsweise können elektrische Maschinen als Antrieb für ein ganz oder teilweise elektrisch betriebenes Kraftfahrzeug verwendet werden. Aus Sicherheitsgründen müssen dabei Vorkehrungen für einen möglichen Fehlerfall getroffen werden. Ein solcher Fehlerfall kann beispielsweise eine Störung oder ein Ausfall eines Sensors sein, der Messwerte für einen sicheren Betrieb der elektrischen Maschine liefert. Ein weiterer Fehlerfall kann beispielsweise der Ausfall einer Versorgungsspannung in einem elektrisch betriebenen Kraftfahrzeug sein. Eine Möglichkeit für einen Betriebsmodus im Fehlerfall ist ein Freilaufbetrieb der elektrischen Maschine. Dabei wird die elektrische Maschine von außen nicht weiter mit einer elektrischen Spannung beaufschlagt. Die elektrischen Phasenanschlüsse der Maschine werden dabei voneinander getrennt. Ein weiterer sicherer Betriebsmodus ist der sogenannte aktive Kurzschluss. Bei diesem aktiven Kurzschluss werden durch geeignete Schaltelemente alle Phasenanschlüsse der Maschine elektrisch miteinander verbunden.

Aus der Deutschen Patentanmeldung DE 10 2012 101 508 A1 ist ein Verfahren und eine Vorrichtung bekannt, die eine elektrische Maschine beim Ausfall einer Versorgungsspannung zunächst in einem solchen aktiven Kurzschluss betreiben. Hierbei werden Stromrichterventile im Zwischenkreis einer Ansteuerschaltung für die elektrische Maschine geschlossen und somit die Anschlüsse der elektrischen Maschine kurzgeschlossen.

DE 10 2007 020 509 A1 betrifft die Fehlerbehandlung einer elektrischen Maschine eines Hybridantriebs. Vor dem Kurzschließen des Versorgungsanschlusses der elektrischen Maschine wird die elektrische Maschine dabei für eine vorbestimmte Zeitspanne im Freilauf angesteuert.

DE 10 2012 002 023 A1 betrifft ein Verfahren und eine Vorrichtung zum Betreiben einer Wechselrichterschaltung einer Elektromaschine. Ist die Drehzahl der Elektromaschine oberhalb eines Grenzwertes, so wird die Elektromaschine im Kurzschlussmodus betrieben. Ist die Drehzahl unterhalb des Grenzwertes, wird die Elektromaschine im Freilaufmodus betrieben.

US 7 279 862 B1 betrifft die Fehlerbehandlung eines wechselrichtergesteuerten Elektromotors. Wenn die Geschwindigkeit des Motors größer ist als eine vorgegebene Geschwindigkeit, wird der Motor im Freilauf betrieben. Ist die Geschwindigkeit des Motors kleiner als eine vorgegebene Geschwindigkeit, wird der Motor im Kurzschlussmodus betrieben.

Es besteht ein Bedarf nach einer Vorrichtung und einem Verfahren zum Betreiben einer elektrischen Maschine, die es ermöglichen, an der elektrischen Maschine sicher und schonend einen aktiven Kurzschlussbetrieb einzuleiten.

Offenbarung der Erfindung

Hierzu schafft die vorliegende Erfindung eine Vorrichtung und ein Verfahren zum Betreiben einer elektrischen Maschine mit den Merkmalen der unabhängigen Patentansprüche.

Vorteile der Erfindung

Der vorliegenden Erfindung liegt die Idee zugrunde, die elektrische Spannung an den Phasenanschlüssen einer elektrischen Maschine zunächst kontrolliert auf ein geeignetes Spannungsniveau abzusenken, bevor die elektrische Maschine in einen aktiven Kurzschluss geschaltet wird. Somit erfolgt der Übergang von einem aktuellen Betriebsmodus der elektrischen Maschine in den aktiven Kurzschluss nicht schlagartig, sondern unter geregelten Rahmenbedingungen. Durch diesen kontrollierten Übergang der elektrischen Spannung an den Phasenanschlüssen der elektrischen Maschine vor einem aktiven Kurzschluss ist es möglich, die Maschine in den aktiven Kurzschluss zu überführen, ohne dass sich hierbei ein zusätzlicher Überstrom einstellt.

Diese Reduzierung des maximalen Stroms beim Übergang in den aktiven Kurzschluss ermöglicht es, sowohl die Ansteuerschaltung, als auch die elektrische Maschine selbst entsprechend effizienter zu dimensionieren. Darüber hinaus wird durch die Verringerung der maximal auftretenden Ströme auch die Lebensdauer der Ansteuerschaltung und der elektrischen Maschine erhöht und somit die Verfügbarkeit des Gesamtsystems gesteigert. Insbesondere kann die Gefahr, dass es aufgrund von zu hohen Überströmen bei dem Wechsel in den aktiven Kurzschluss in der elektrischen Maschine zu einer Entmagnetisierung der Magnete im Rotor der Maschine kommt, verringert werden. Auch sinkt die mechanische Belastung innerhalb der elektrischen Maschine und insbesondere in den Wicklungen der elektrischen Maschine bei einem erfindungsgemäßen Übergang in den aktiven Kurzschluss.

Gemäß einer Ausführungsform ist der Wechselrichter dazu ausgelegt, die Amplitude der an den Anschlüssen der elektrischen Maschine bereitgestellten Wechselspannung vor einem Übergang von dem gesteuerten Betrieb in den Kurzschlussbetrieb auf 0 Volt abzusenken. Alternativ kann die Spannung an den Phasenanschlüssen der elektrischen Maschine auf einen Wert von annähernd 0 Volt abgesenkt werden oder zumindest auf einen Wert reduziert werden, der kleiner ist als die Spannung an den Anschlüssen der elektrischen Maschine während des gesteuerten Betriebs. Durch ein solches Absenken der elektrischen Spannung an den Phasenanschlüssen der elektrischen Maschine vor dem Übergang in den aktiven Kurzschluss kann sichergestellt werden, dass es zu keinen gefährlichen Überströmen kommt, die zu Beschädigungen oder einer vorzeitigen Alterung der verwendeten Bauteile führen würde.

Im Freilaufbetrieb wird die elektrische Maschine zunächst nicht aktiv angesteuert. Soll vom Freilaufbetrieb in den aktiven Kurzschluss gewechselt werden, so kann zur Vermeidung von unverhältnismäßig großen Überströmen daher zunächst die elektrische Maschine mit einer elektrischen Spannung angesteuert werden, die zumindest annähernd der aktuell an den Anschlüssen der elektrischen Maschine anliegenden Freilaufspannung entspricht. Daraufhin kann diese Spannung, mit der die elektrische Maschine dann angesteuert wird, aktiv auf den vorbestimmten Wert abgesenkt werden, der für einen schonenden Wechsel in den aktiven Kurzschluss erforderlich ist. Auf diese Weise ist auch ein schonender Übergang vom Freilaufbetrieb in den aktiven Kurzschluss möglich, ohne dass dabei gefährliche Überströme auftreten würden.

Da die Freilaufspannung in der Regel eine von der Drehzahl der elektrischen Maschine abhängige Funktion darstellt, kann auch in diesem Fall eine effiziente Bestimmung der Freilaufspannung an der elektrischen Maschine ermöglicht werden, so dass es auch beim Ansteuern der elektrischen Maschine mit der Freilaufspannung zu keinen größeren Diskrepanzen zwischen der von dem Wechselrichter bereitgestellten Spannung und der tatsächlichen Freilaufspannung kommt.

Zusätzlich oder alternativ kann die Vorrichtung zum Betreiben der elektrischen Maschine auch über einen Spannungssensor verfügen, der die elektrische Spannung an den Anschlüssen der Maschine erfasst, wobei der dem Wechselrichter bei einem Übergang von dem Freilaufbetrieb in den Kurzschlussbetrieb zunächst die von dem Sensor erfasste Freilaufspannung einstellt. Anschließend kann dann ausgehend von dieser Spannung die Ansteuerung auf die für den Wechsel in den aktiven Kurzschluss erforderliche Spannung angepasst werden.

Gemäß einem Ausführungsbeispiel ist der Wechselrichter dazu ausgelegt, die Amplitude der Wechselspannung nach Beendigung des gesteuerten Betriebs innerhalb einer vorbestimmten Zeitdauer auf den vorbestimmten Wert einzustellen. Auf diese Weise kann die Zeitspanne innerhalb derer der Übergang von dem gesteuerten Betrieb in den Kurzschlussbetrieb erfolgt, vorgegeben werden. Somit ist auch sichergestellt, dass es zu keiner unverhältnismäßigen Verzögerung bei der Aktivierung des aktiven Kurzschlusses kommt.

Alternativ ist es auch möglich, dass der Wechselrichter bei einem Übergang von dem gesteuerten Betrieb zu dem Kurzschlussbetrieb die Amplitude der an den Anschlüssen der elektrischen Maschine bereitgestellten Wechselspannung mit einer vorbestimmten Steilheit, das heißt mit einer vorbestimmten Spannungsdifferenz pro Zeiteinheit einstellt. Auf diese Weise kann sichergestellt werden, dass es zu keinen unverhältnismäßig großen Veränderungen in den Spannungsverhältnissen kommt.

Die vorliegende Erfindung betrifft ferner eine elektrische Antriebsvorrichtung mit einer elektrischen Maschine und einer erfindungsgemäßen Vorrichtung zum Betreiben einer elektrischen Maschine.

Gemäß einem Ausführungsbeispiel umfasst die elektrische Maschine dabei eine permanent erregte Synchronmaschine.

Ferner betrifft die vorliegende Erfindung ein Kraftfahrzeug mit einer elektrischen Maschine, die von einer erfindungsgemäßen Vorrichtung zum Betreiben der elektrischen Maschine angesteuert wird.

Weitere Ausführungsformen und Vorteile der vorliegenden Erfindung ergeben sich aus der nachfolgenden Beschreibung unter Bezug auf die beigefügten Figuren.

Kurze Beschreibung der Figuren

Dabei zeigen:

Figur 1:    eine schematische Darstellung einer elektrischen Antriebsvorrichtung;

Figur 2:    eine schematische Darstellung einer elektrischen Antriebsvorrichtung im Freilaufbetrieb;

Figur 3:    eine schematische Darstellung einer elektrischen Antriebsvorrichtung in einem aktiven Kurzschlussbetrieb gemäß einer Ausführungsform;

Figur 4:    eine schematische Darstellung einer elektrischen Antriebsvorrichtung in einem aktiven Kurzschlussbetrieb gemäß einer weiteren Ausführungsform;

Figur 5:    eine schematische Darstellung eines elektrischen Antriebssystems gemäß einer weiteren Ausführungsform der vorliegenden Erfindung; und

Figur 6:    eine schematische Darstellung eines Ablaufdiagramms für ein Verfahren wie es einer weiteren Ausführungsform zugrunde liegt.

Beschreibung von Ausführungsformen

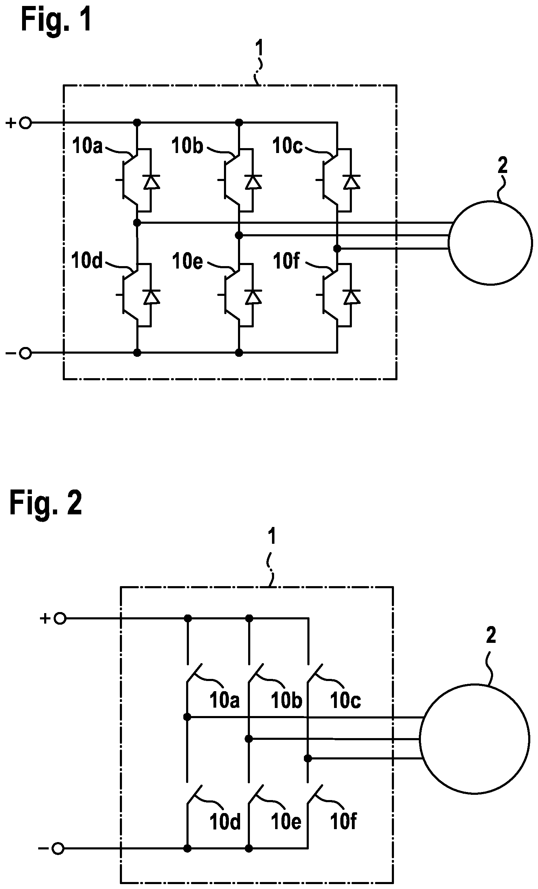

Figur 1 zeigt eine schematische Darstellung eines elektrischen Antriebssystems, wie es der vorliegenden Erfindung zugrunde liegt. Das elektrische Antriebssystem umfasst eine elektrische Maschine 2 und einen Wechselrichter 1. Der Wechselrichter 1 wird dabei mit elektrischer Energie, vorzugsweise einer Gleichspannung gespeist. Die Gleichspannung kann beispielsweise aus einem elektrischen Energiespeicher, wie z.B. einer Batterie stammen. Beispielsweise kann es sich dabei um die Traktionsbatterie eines Elektro- oder Hybridfahrzeuges handeln. Alternative Möglichkeiten zur Bereitstellung einer elektrischen Spannung sind ebenso möglich. Beispielsweise kann die elektrische Energie auch aus einem Wechselspannungsnetz bezogen werden und mittels eines AC-DC-Konverters in eine Gleichspannung umgewandelt werden.

In einem gesteuerten Betrieb konvertiert der Wechselrichter 1 die an dem Eingang bereitgestellte elektrische Energie in eine geeignete Wechselspannung und stellt diese an den Phasenanschlüssen der elektrischen Maschine 2 bereit. In einem Regelbetrieb kann dabei die bereitgestellte elektrische Wechselspannung an den Anschlüssen der elektrischen Maschine 2 so eingestellt werden, dass eine gewünschte Drehzahl oder ein gewünschtes Drehmoment durch die elektrische Maschine 2 erzielt wird. Hierzu kann das elektrische Antriebssystem ferner auch über einen oder mehrere Sensoren (nicht dargestellt) verfügen, die zum Beispiel die aktuelle Drehzahl, Spannungsverhältnisse oder Phasenströme innerhalb des elektrischen Antriebssystems ermitteln. Diese Sensorwerte können dann von einer Regelung ausgewertet werden und daraufhin basierend auf den vorgegebenen Sollwerten die Ansteuerung des Wechselrichters 1 angepasst werden.

In den hier dargestellten Ausführungsbeispielen handelt es sich bei der elektrischen Maschine 2 um einen dreiphasigen Elektromotor. Darüber hinaus sind auch elektrische Maschinen mit einer anderen Anzahl von Phasenanschlüssen ebenso möglich. Bei der elektrischen Maschine 2 kann es sich beispielsweise um eine Synchronmaschine, vorzugsweise um eine permanent erregte Synchronmaschine handeln. Aber auch andere elektrische Maschinen, wie zum Beispiel eine Asynchronmaschine, etc. sind darüber hinaus ebenso möglich.

Der Wechselrichter 1 umfasst dabei mehrere Schaltelemente 10a-10f. Durch geeignetes Ansteuern dieser Schaltelemente 10a-10f kann der Wechselrichter 1 somit aus der am Eingang bereitgestellten Spannung eine Wechselspannung konvertieren, die an den Anschlüssen der elektrischen Maschine 2 bereitgestellt wird. Entsprechend der Ansteuerung der einzelnen Schaltelemente 10a-10f kann beispielsweise durch geeignetes Pulsen dieser Schaltelemente 10a-10f eine Wechselspannung mit einer vorgegebenen Amplitude generiert werden. Dabei kann die Amplitude der so erzeugten Wechselspannung in Abhängigkeit eines zu erzielenden Drehmoments bzw. einer zu erzielenden Drehzahl der elektrischen Maschine 2 angepasst werden.

Vorzugsweise handelt es sich bei den Schaltelementen 10a-10f um Halbleiterschaltelemente, wie zum Beispiel IGBT oder MOSFET. Parallel zu jedem dieser Schaltelemente 10a-10f kann darüber hinaus eine Freilaufdiode angeordnet werden. Durch diese Freilaufdiode kann bei geöffnetem Halbleiterschalter gegebenenfalls ein durch die elektrische Maschine 2 getriebener Strom fließen.

Figur 2 zeigt eine schematische Darstellung eines elektrischen Antriebssystems im Freilauf. Die Schaltelemente 10a-10f sind dabei zur besseren Darstellung nur als einfache Schalter dargestellt. Analog zu Figur 1 kann es sich dabei bei jedem der Schaltelemente 10a-10f um einen Halbleiterschalter mit einer parallel geschalteten Freilaufdiode handeln. Die in Figur 2 dargestellten Schaltelemente zeigen dabei jeweils den Zustand der entsprechenden Schaltelemente 10a-10f. In dem hier dargestellten Freilaufbetrieb sind dabei alle Schaltelemente 10a-10f geöffnet. An der elektrischen Maschine 2 wird somit durch den Wechselrichter 1 keine Spannung bereitgestellt. An den Anschlussklemmen der elektrischen Maschine 2 liegt somit lediglich die durch die elektrische Maschine 2 im Generatorbetrieb erzeugte Freilaufspannung an. Gegebenenfalls kann dabei über die parallel zu den Schaltelementen 10a-10f angeordneten Freilaufdioden ein Strom fließen.

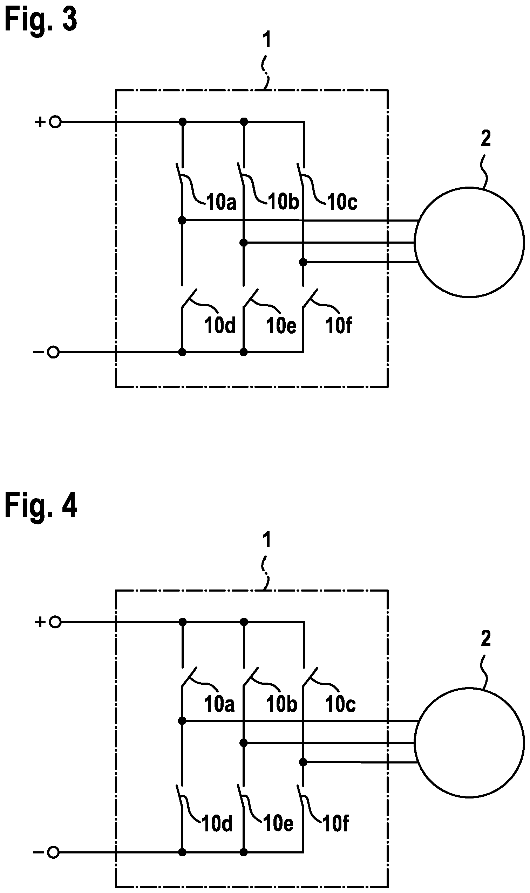

Figur 3 zeigt eine schematische Darstellung einer Ansteuerung der elektrischen Maschine 2 in einem aktiven Kurzschluss gemäß einem ersten Ausführungsbeispiel. In diesem Ausführungsbeispiel sind die oberen drei Schaltelemente 10a, 10b und 10c geschlossen. Somit sind die Phasenanschlüsse der elektrischen Maschine 2 über diese drei Schaltelemente 10a-10c miteinander elektrisch verbunden, also kurzgeschlossen.

Figur 4 zeigt eine alternative schematische Darstellung für einen aktiven Kurzschluss gemäß einem weiteren Ausführungsbeispiel. Dabei sind in diesem Ausführungsbeispiel die unteren Schaltelemente 10d, 10e und 10f geschlossen, während die oberen drei Schaltelemente 10a-10c geöffnet sind. Somit sind in diesem Ausführungsbeispiel die Phasenanschlüsse der elektrischen Maschine 2 über die unteren drei Schaltelemente 10d-10f miteinander elektrisch verbunden und somit kurzgeschlossen.

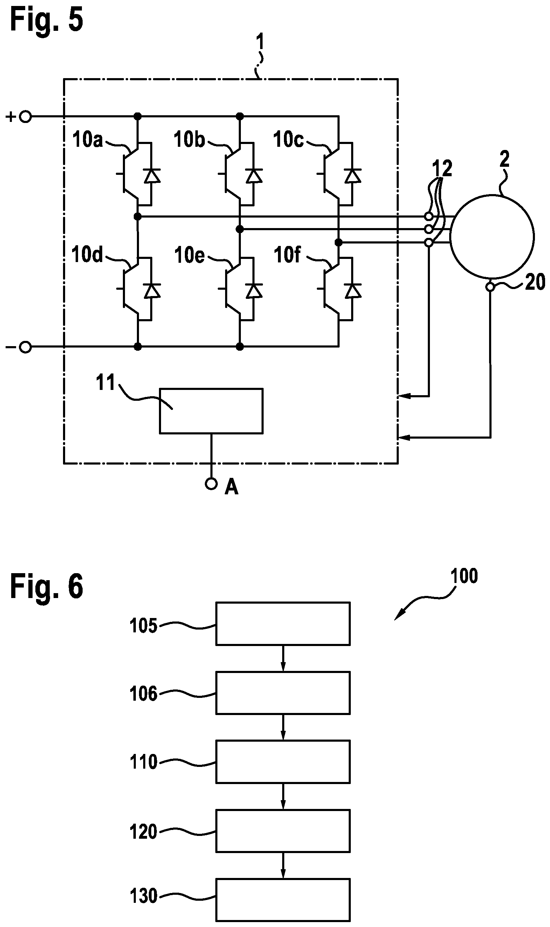

Figur 5 zeigt eine schematische Darstellung einer elektrischen Antriebsvorrichtung gemäß einer Ausführungsform der vorliegenden Erfindung. Die elektrische Antriebsvorrichtung umfasst eine elektrische Maschine 2. Dabei kann es sich bei der elektrischen Maschine 2 um eine der bereits zuvor genannten elektrischen Maschinen, wie beispielsweise eine Synchronmaschine, zum Beispiel eine permanent erregte Synchronmaschine oder alternativ auch um ein Asynchronmaschine oder ähnliches handeln. Auch in diesem Ausführungsbeispiel sind die drei Phasenanschlüsse für die Verbindung der elektrischen Maschine 2 mit dem Wechselrichter 1 nur beispielhaft zu verstehen. Eine beliebige andere Anzahl von Phasenanschlüssen ist darüber hinaus ebenso möglich.

Die elektrische Maschine 2 wird, wie bereits zuvor beschrieben, von einem Wechselrichter 1 angesteuert. In einem Regelbetrieb stellt der Wechselrichter 1 dabei an den Phasenanschlüssen der elektrischen Maschine 2 jeweils ein geeignetes Wechselspannungssignal bereit. Auf diese Weise ist es möglich, die elektrische Maschine 2 mit einer vorgegebenen Drehzahl oder einem vorgegebenen Drehmoment zu betreiben.

Kommt es während des Betriebs des elektrischen Antriebs zu einem Fehlerfall, so kann es dabei erforderlich sein, die Phasenanschlüsse der elektrischen Maschine 2 untereinander kurzzuschließen. Hierzu kann die elektrische Maschine 2 gemäß Figur 3 oder Figur 4 durch den Wechselrichter 1 in den aktiven Kurzschluss versetzt werden und so ein sicherer Zustand der elektrischen Maschine 2 hergestellt werden.

Wird durch eine Steuervorrichtung 11 des Wechselrichters 1 oder auch über eine externe Kontroll- und/oder Steuervorrichtung (hier nicht dargestellt) ein solcher Fehlerfall erkannt, der einen aktiven Kurzschluss erfordert, so werden die Phasenanschlüsse der elektrischen Maschine 2 nicht unmittelbar sofort miteinander elektrisch verbunden. Sobald die Steuervorrichtung 11 des Wechselrichters 1 einen Fehlerfall detektiert, oder über einen weiteren Anschluss A eine Anforderung für einen aktiven Kurzschluss erhält, wird die Spannung an den Phasenanschlüssen der elektrischen Maschine 2 zunächst kontinuierlich auf einen Wert angepasst, der einen Wechsel in den aktiven Kurzschluss ermöglicht, ohne dass dabei Überströme auftreten. Beispielsweise kann es sich dabei um einen zuvor definierten Spannungswert, also um eine Wechselspannung mit einer vorbestimmten Amplitude, handeln, auf den die Spannungen an den Phasenanschlüssen der elektrischen Maschine 2 zunächst eingeregelt werden. In der Regel wird dabei die zum Zeitpunkt der Anforderung für einen aktiven Kurzschluss an den Phasenanschlüssen der elektrischen Maschine 2 anliegende Spannung auf einen geringeren Spannungswert kontinuierlich abgesenkt.

Da bei einem aktiven Kurzschluss der elektrischen Maschine 2 die Phasenanschlüsse der elektrischen Maschine 2 kurzgeschlossen sind, wird bei diesem Absenken der Spannung an den Phasenanschlüssen der elektrischen Maschine 2 die Spannung vorzugsweise von dem aktuellen Wert auf 0 Volt heruntergeregelt. Es ist jedoch auch möglich, die Spannung an den Phasenanschlüssen der elektrischen Maschine 2 nicht vollständig auf 0 Volt herunter zu regeln, sondern die Phasenspannungen nur auf einen vorgegebenen Wert abzusenken und daraufhin durch den Wechselrichter 1 die Phasenanschlüsse der elektrischen Maschine 2 untereinander kurzzuschließen.

Die Amplitude der Wechselspannung, die zum Beginn der Anforderung für einen aktiven Kurzschluss an den Phasenanschlüssen der elektrischen Maschine 2 anliegt, kann dabei innerhalb eines vorbestimmten Zeitintervalls auf den vorbestimmten Wert angepasst werden, der für einen Wechsel in den aktiven Kurzschluss erforderlich ist. Beispielsweise kann es sich bei diesem Zeitintervall um ein Zeitintervall von wenigen Millisekunden, beispielsweise 20 Millisekunden, 10 Millisekunden, 5 Millisekunden oder auch nur 1 Millisekunde handeln. Auf diese Weise kann sichergestellt werden, dass der aktive Kurzschluss auch innerhalb kurzer Zeit tatsächlich realisiert werden kann und es gerade im Fehlerfall zu keinen größeren Verzögerungen für das Einstellen eines sicheren Zustandes kommt.

Alternativ kann der Wechsel von der aktuellen Phasenspannung an den Anschlüssen der elektrischen Maschine 2 auf den Wert für den Wechsel in den aktiven Zustand auch mit einer vorgegebenen maximalen Steilheit ausgeführt werden. Das heißt, die Amplitude der an den Phasenanschlüssen der elektrischen Maschine 2 anliegenden Spannung wird dabei pro Zeiteinheit maximal um einen vorgegebenen Wert verändert. Auf diese Weise kann gewährleistet werden, dass es zu keinen unverhältnismäßig großen Spannungssprüngen bei der Ansteuerung der elektrischen Maschine 2 kommt.

Die Änderung der Spannungsverhältnisse an den Phasenanschlüssen der elektrischen Maschine 2 erfolgt dabei vorzugsweise linear, das heißt die Amplitude der Spannung an den Phasenanschlüssen wird über den gesamten Zeitraum mit einer konstanten Spannungsänderung pro Zeiteinheit ausgeführt. Aber auch alternative Variationen der Spannungswerte zum Einstellen der vorgegebenen Spannung für den Wechsel in den aktiven Kurzschluss sind ebenso möglich.

Werden während des Übergangs in den aktiven Kurzschluss die Spannungen an den Phasenanschlüssen der elektrischen Maschine 2 über die Stellgrößen einer d-q-Regelung vorgenommen, so können die Komponenten der beiden Spannungen $U_d(t)$ und $U_q(t)$ wie folgt geregelt werden:

$$U_d(t) = \frac{U_{d,init}}{\Delta t}(t - \Delta t);$$

$$U_q(t) = \frac{U_{q,init}}{\Delta t}(t - \Delta t);$$

Dabei sind $U_{d,init}$ und $U_{q,init}$ jeweils die beiden initialen Spannungswerte zu Beginn der Anforderung für einen aktiven Kurzschluss und $\Delta t$ die Zeitspanne während der in den aktiven Kurzschluss gewechselt werden soll.

In diesem Fall erfolgt die Absenkung der Spannungen an den Phasenanschlüssen der elektrischen Maschine 2 von den initialen Werten zu Beginn der Anforderung für einen aktiven Kurzschluss auf 0 Volt beim Wechsel in den aktiven Kurzschluss, ohne dass hierzu eine Messung der Phasenströme erforderlich wäre.

Alternativ ist es jedoch auch möglich, sofern verfügbar, Sensorwerte über den aktuellen Zustand der elektrischen Antriebsvorrichtung, wie beispielsweise die Phasenströme oder die aktuellen Spannungsverhältnisse an der elektrischen Maschine 2 mit in den Regelprozess einfließen zu lassen.

In dem zuvor beschriebenen Übergang von einem Regelbetrieb, bei dem die elektrische Maschine durch den Wechselrichter 1 aktiv mit Spannungen beaufschlagt wird, in den aktiven Kurzschluss, ist es darüber hinaus auch möglich, die elektrische Maschine aus dem Freilaufbetrieb ebenfalls in den aktiven Kurzschluss zu überführen, ohne dass hierbei gefährliche Überströme auftreten. Befindet sich der elektrische Antrieb im Freilaufbetrieb, das heißt alle Schaltelemente 10a-10f des Wechselrichters 1 sind geöffnet und die elektrischen Phasenanschlüsse sind voneinander elektrisch getrennt, so stellt sich an diesen Phasenanschlüssen jeweils eine elektrische Wechselspannung ein, die zu diesem Zeitpunkt nicht durch den Wechselrichter 1 beeinflusst wird.

Soll aus diesem Freilaufbetrieb in den aktiven Kurzschluss gewechselt werden, so muss dabei zunächst die elektrische Maschine 2 durch den Wechselrichter 1 aktiv angesteuert werden. Während dieser Ansteuerung der elektrischen Maschine 2 durch den Wechselrichter 1 kann dabei die Spannung an den Phasenanschlüssen der elektrischen Maschine 2 wie bereits zuvor beschrieben auf einen vorbestimmten Wert, beispielsweise 0 Volt abgesenkt werden. Um zu Beginn dieser aktiven Ansteuerung keine Spannungssprünge zu verursachen, wird beim Wechsel vom Freilaufbetrieb in den gesteuerten Betrieb die elektrische Maschine 2 zunächst mit einer Spannung angesteuert, die der Freilaufspannung der elektrischen Maschine 2 entspricht. Beispielsweise kann die elektrische Antriebsvorrichtung hierzu einen Spannungssensor 12 aufweisen, der die Spannungen an den Phasenanschlüssen der elektrischen Maschine 2 misst. Die so gemessenen Spannungswerte werden dem Regler 11 des Wechselrichters 1 bereitgestellt, worauf der Wechselrichter 1 an den Phasenanschlüssen der elektrischen Maschine 2 eine Wechselspannung bereitgestellt, die diesen Spannungswerten entspricht.

Alternativ ist es auch möglich, über einen Drehzahlsensor 20 die aktuelle Drehzahl der elektrischen Maschine 2 zu erfassen und hieraus die aktuelle Freilaufspannung der elektrischen Maschine 2 zu bestimmen. Beispielsweise können die Beziehungen zwischen Drehzahl und korrespondierender Freilaufspannung der elektrischen Maschine 2 in einem Speicher abgelegt werden. Nach dem Bestimmen der aktuellen Drehzahl der elektrischen Maschine 2 kann somit aus diesem Speicher die korrespondierende Freilaufspannung ausgelesen und an den Anschlüssen der elektrischen Maschine eingestellt werden. Alternativ ist es auch möglich, eine mathematische Beziehung zwischen Freilaufspannung und Drehzahl zu definieren und basierend aus der erfassten Drehzahl der elektrischen Maschine 2 die Freilaufspannung zu bestimmen. Weitere Möglichkeiten zur Bestimmung bzw. Berechnung der Freilaufspannung sind ebenso möglich. Neben einer sensorischen Messung der aktuellen Drehzahl der elektrischen Maschine 2 ist es auch möglich, die Drehzahl basierend auf einem Modell, Schätzwerten oder der zuletzt aktiv eingeregelten Drehzahl zu bestimmen. Weitere Möglichkeiten zur Bestimmung der Drehzahl der elektrischen Maschine 2 im Freilauf sind ebenso möglich.

Nachdem zunächst durch den Wechselrichter 1 an den Phasenanschlüssen der elektrischen Maschine 2 die Freilaufspannung eingestellt worden ist, wird anschließend die durch den Wechselrichter 1 bereitgestellte Wechselspannung an den Phasenanschlüssen der elektrischen Maschine 2 kontinuierlich auf einen vorbestimmten Wert abgesenkt. Ist dieser vorbestimmte Wert erreicht, so schaltet der Wechselrichter 1 daraufhin in den aktiven Kurzschluss, beispielsweise gemäß Figur 3 oder 4.

Figur 6 zeigt eine schematische Darstellung eines Ablaufdiagramms, wie es einem Verfahren 100 zum Betreiben einer elektrischen Maschine 2 zugrunde liegt. In einem Regelbetrieb, bei dem die elektrische Maschine 2 mit einer vorgegebenen Drehzahl oder einem vorgegebenen Drehmoment betrieben werden soll, wird die elektrische Maschine 2 mit einer entsprechenden Wechselspannung angesteuert. Soll eine so angesteuerte elektrische Maschine 2 in den aktiven Kurzschluss wechseln, so wird nach Auftreten eines entsprechenden Ereignisses, beispielsweise der Detektion eines Fehlerfalls oder einer direkten Anforderung für den aktiven Kurzschluss, die Amplitude der Wechselspannung an den Anschlüssen der elektrischen Maschine auf einen vorbestimmten Wert eingestellt. Dieses Einstellen der Wechselspannung auf den vorbestimmten Wert erfolgt dabei ausgehend von der Spannung mit der die elektrische Maschine im Regelbetrieb angesteuert wird auf den vorbestimmten Wert innerhalb einer vorbestimmten Zeitdauer oder mit einer vorgegebenen Steilheit. Nachdem der vorbestimmte Wert der Wechselspannung an den Anschlüssen der elektrischen Maschine eingestellt worden ist, werden in Schritt 130 die Anschlüsse der elektrischen Maschine elektrisch miteinander verbunden und so kurzgeschlossen.

Wird die elektrische Maschine in einem Schritt 105 in einem Freilaufbetrieb betrieben, bei dem die Anschlüsse der elektrischen Maschine voneinander elektrisch getrennt sind, so ist es dabei zunächst erforderlich, die elektrische Maschine definiert anzusteuern. Hierzu wird in Schritt 106 eine Freilaufspannung ermittelt, die der Spannung an den Anschlüssen der elektrischen Maschine in einem Freilaufbetrieb entspricht. Daraufhin erfolgt in dem zuvor beschriebenen Schritt 110 die Ansteuerung der elektrischen Maschine mit der ermittelten Freilaufspannung.

Zusammenfassend betrifft die vorliegende Erfindung ein Verfahren und eine Vorrichtung zum Betreiben einer elektrischen Maschine für einen sanften Wechsel von einem Regel- oder Freilaufbetrieb in einen aktiven Kurzschluss. Hierzu wird eine Spannung, mit der die elektrische Maschine angesteuert wird, zunächst definiert auf einen vorgegebenen, vorzugsweise sehr geringen Wert heruntergeregelt und anschließend erst die Phasenanschlüsse der elektrischen Maschine kurzgeschlossen. Somit können unverhältnismäßig große Überströme, insbesondere Überströme, die größer als der Nennstrom der elektrischen Maschine sind, vermieden werden.

**Patentansprüche**

1. Vorrichtung zum Betreiben einer elektrischen Maschine (2), mit
einem Wechselrichter (1), der eine Mehrzahl von Schaltelementen (10a-10f) umfasst, und der dazu ausgelegt ist, durch Ansteuern der Schaltelemente (10a-10f) in einem gesteuerten Betrieb eine Wechselspannung an den Anschlüssen der elektrischen Maschine (2) bereitzustellen, in einem Freilaufbetrieb die Anschlüsse der elektrischen Maschine (2) voneinander elektrisch zu trennen und in einem Kurzschlussbetrieb die Anschlüsse der elektrischen Maschine (2) elektrisch miteinander zu verbinden, und
einem Drehzahlsensor (20), der dazu ausgelegt ist, die Drehzahl der elektrischen Maschine (2) zu bestimmen,
wobei der Wechselrichter (1) dazu ausgelegt ist, bei einem Übergang von dem gesteuerten Betrieb zu dem Kurzschlussbetrieb die Amplitude der an den Anschlüssen der elektrischen Maschine (2) bereitgestellten Wechselspannung auf einen vorbestimmten Wert einzustellen; und
wobei der Wechselrichter (1) dazu ausgelegt ist, bei einem Übergang von dem Freilaufbetrieb zu dem Kurzschlussbetrieb zunächst eine drehzahlabhängige Freilaufspannung zu ermitteln und die ermittelte drehzahlabhängige Freilaufspannung an den Anschlüssen der elektrischen Maschine (2) bereitzustellen.

2. Vorrichtung nach Anspruch 1, wobei der Wechselrichter (1) dazu ausgelegt ist, durch Ansteuern der Schaltelemente (10a,-10f) die Amplitude der an den Anschlüssen der elektrischen Maschine (2) bereitgestellten Wechselspannung vor einem Übergang von dem gesteuerten Betrieb in den Kurzschlussbetrieb auf 0 Volt abzusenken.

3. Vorrichtung nach Anspruch 1 oder 2, wobei der Wechselrichter (1) dazu ausgelegt ist, die Amplitude der Wechselspannung innerhalb eines vorbestimmten Zeitintervalls auf den vorbestimmten Wert einzustellen.

4. Elektrische Antriebsvorrichtung, mit:

   einer elektrischen Maschine (2); und

einer Vorrichtung nach einem der Ansprüche 1 bis 3.

5. Elektrische Antriebsvorrichtung nach Anspruch 4, wobei die elektrische Maschine (2) eine permanenterregte Synchronmaschine umfasst.

6. Kraftfahrzeug mit einer elektrischen Maschine (2), die von einer Vorrichtung nach einem der Ansprüche 1 bis 3 angesteuert wird.

7. Verfahren (100) zum Betreiben einer elektrischen Maschine (2), mit den Schritten:

   Betreiben (105) einer elektrischen Maschine (2) in einem Freilaufbetrieb, wobei die Anschlüsse der elektrischen Maschine (2) voneinander elektrisch getrennt sind;
   Erfassen einer aktuellen Drehzahl der elektrischen Maschine (2) mit einem Drehzahlsensor;
   Ermitteln (106) einer drehzahlabhängigen Freilaufspannung, die der Spannung an der Anschlüssen der elektrischen Maschine (2) in dem Freilaufbetrieb entspricht, basierend auf der ermittelten aktuellen Drehzahl der elektrischen Maschine (2);
   Ansteuern (110) der Anschlüsse der elektrischen Maschine (2) mit der ermittelten Freilaufspannung in einem gesteuerten Betrieb;
   Einstellen (120) der Amplitude der Wechselspannung, mit der die elektrische Maschine (2) angesteuert wird, auf einen vorbestimmten Wert; und
   elektrisches Verbinden (130) der Anschlüsse der elektrischen Maschine (2), nachdem die Amplitude der Wechselspannung auf den vorbestimmten Wert eingestellt worden ist, in einem Kurzschlussbetrieb.

**Claims**

1. Device for operating an electrical machine (2), having
an inverter (1) that comprises a multiplicity of switching elements (10a-10f) and that is designed to provide an AC voltage at the terminals of the electrical machine (2) by driving the switching elements (10a-10f) in a controlled mode, to electrically disconnect the terminals of the electrical machine (2) from one another in a freewheeling mode and to electrically connect the terminals of the electrical machine (2) to one another in a short-circuit mode, and
a rotational speed sensor (20) that is designed to determine the rotational speed of the electrical machine (2),
wherein the inverter (1) is designed, in the event of a transition from the controlled mode to the short-circuit mode, to set the amplitude of the AC voltage provided at the terminals of the electrical machine (2) to a predetermined value; and
wherein the inverter (1) is designed, in the event of a transition from the freewheeling mode to the short-circuit mode, to first of all determine a rotational speed-dependent freewheeling voltage and to provide the determined rotational speed-dependent freewheeling voltage at the terminals of the electrical machine (2).

2. Device according to Claim 1, wherein the inverter (1) is designed to reduce the amplitude of the AC voltage provided at the terminals of the electrical machine (2) to 0 volt prior to a transition from the controlled mode to the short-circuit mode by driving the switching elements (10a-10f).

3. Device according to Claim 1 or 2, wherein the inverter (1) is designed to set the amplitude of the AC voltage to the predetermined value within a predetermined time interval.

4. Electrical drive device, having:

   an electrical machine (2); and
   a device according to one of Claims 1 to 3.

5. Electrical drive device according to Claim 4, wherein the electrical machine (2) comprises a permanently excited synchronous machine.

6. Motor vehicle having an electrical machine (2) that is driven by a device according to one of Claims 1 to 3.

7. Method (100) for operating an electrical machine (2), having the steps of:

   operating (105) an electrical machine (2) in a freewheeling mode, wherein the terminals of the electrical machine (2) are electrically disconnected from one another;
   recording a current rotational speed of the electrical machine (2) using a rotational speed sensor;
   determining (106) a rotational speed-dependent freewheeling voltage that corresponds to the voltage at the terminals of the electrical machine (2) in the freewheeling mode, based on the determined current rotational speed of the electrical machine (2);
   driving (110) the terminals of the electrical machine (2) with the determined freewheeling voltage in a controlled mode;
   setting (120) the amplitude of the AC voltage with which the electrical machine (2) is driven to a predetermined value; and

electrically connecting (130) the terminals of the electrical machine (2) after the amplitude of the AC voltage has been set to the predetermined value, in a short-circuit mode.

## Revendications

1. Dispositif pour faire fonctionner une machine électrique (2), comportant
   un onduleur (1) qui comprend une pluralité d'éléments de commutation (10a-10f) et qui est conçu pour fournir une tension alternative aux bornes de la machine électrique (2) en commandant les éléments de commutation (10a-10f) dans un mode commandé, pour séparer électriquement les unes des autres les bornes de la machine électrique (2) dans un mode de roue libre et pour relier électriquement les unes aux autres les bornes de la machine électrique (2) dans un mode de court-circuit, et
   un capteur de vitesse de rotation (20) conçu pour déterminer la vitesse de rotation de la machine électrique (2),
   dans lequel l'onduleur (1) est conçu pour régler l'amplitude de la tension alternative fournie aux bornes de la machine électrique (2) à une valeur prédéterminée lors d'une transition du mode commandé au mode de court-circuit ; et
   dans lequel l'onduleur (1) est conçu pour déterminer initialement une tension de roue libre en fonction de la vitesse de rotation pendant une transition entre le mode de roue libre et le mode de court-circuit et pour fournir aux bornes de la machine électrique (2) la tension de roue libre déterminée en fonction de la vitesse de rotation.

2. Dispositif selon la revendication 1, dans lequel l'onduleur (1) est conçu pour réduire l'amplitude de la tension alternative fournie aux bornes de la machine électrique (2) à 0 volt en commandant les éléments de commutation (10a, -10f) avant une transition du mode commandé au mode de court-circuit.

3. Dispositif selon la revendication 1 ou 2, dans lequel l'onduleur (1) est conçu pour régler l'amplitude de la tension alternative à la valeur prédéterminée au cours d'un intervalle de temps prédéterminé.

4. Dispositif d'entraînement électrique, comprenant :

   une machine électrique (2) ; et
   un dispositif selon l'une des revendications 1 à 3.

5. Dispositif d'entraînement électrique selon la revendication 4, dans lequel la machine électrique (2) comprend une machine synchrone à excitation permanente.

**6.** Véhicule automobile comportant une machine électrique (2) qui est commandée par un dispositif selon l'une des revendications 1 à 3.

**7.** Procédé (100) pour faire fonctionner une machine électrique (2), comprenant les étapes suivantes :

faire fonctionner (105) une machine électrique (2) dans un mode de roue libre, dans lequel les bornes de la machine électrique (2) sont électriquement isolées les unes des autres ;
détecter une vitesse de rotation actuelle de la machine électrique (2) à l'aide d'un capteur de vitesse de rotation ;
déterminer (106), sur la base de la vitesse de rotation actuelle déterminée de la machine électrique (2), une tension de roue libre dépendant de la vitesse de rotation, qui correspond à la tension aux bornes de la machine électrique (2) dans le mode de roue libre ;
commander (110) les bornes de la machine électrique (2) avec la tension de roue libre déterminée en mode commandé ;
régler (120) à une valeur prédéterminée l'amplitude de la tension alternative avec laquelle la machine électrique (2) est commandée ; et
relier électriquement (130) les bornes de la machine électrique (2), après que l'amplitude de la tension alternative a été réglée à la valeur prédéterminée, dans un mode de court-circuit.

# Fig. 1

# Fig. 2

# Fig. 3

# Fig. 4

## Fig. 5

## Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012101508 A1
- DE 102007020509 A1
- DE 102012002023 A1
- US 7279862 B1